# EUROPÄISCHE PATENTSCHRIFT

(11) **EP 2 678 535 B1**
(45) Veröffentlichungstag und Bekanntmachung des Hinweises auf die Patenterteilung: **27.06.2018**
(21) Anmeldenummer: 12706542.3
(22) Anmeldetag: 23.02.2012
(51) Int. Cl.: F01N 1/24, F01N 13/08, D04H 1/4382, D04H 3/002, D04H 3/015, D04H 3/004, D04H 3/073, D04H 5/08, B29C 53/60, B29C 53/56, B29C 65/56, B32B 37/14

(54) **VERFAHREN ZUR HERSTELLUNG EINES FORMMATERIALS AUS FASERMATERIALIEN UND VORRICHTUNG HIERFÜR**
METHOD FOR PRODUCING A MOLDED MATERIAL FROM FIBER MATERIALS, AND DEVICE FOR THIS PURPOSE
PROCÉDÉ DE FABRICATION D'UNE MATIÈRE DE MOULAGE À BASE DE MATÉRIAUX FIBREUX ET DISPOSITIF CORRESPONDANT

(30) Priorität: 23.02.2011 DE 102011012156
(43) Veröffentlichungstag der Anmeldung: 01.01.2014
(73) Patentinhaber: DBW Holding GmbH, 37120 Bovenden (DE)
(72) Erfinder: BAUER, Thomas, 66424 Homburg (DE); REGENT, Karl-Christian, 38304 Wolfenbüttel (DE); SCHWERDTFEGER, Martin, 37574 Einbeck (DE)
(74) Vertreter: Kröncke, Rolf
(86) Internationale Anmeldenummer: PCT/EP2012/053071
(87) Internationale Veröffentlichungsnummer: WO 2012/113866

(56) Entgegenhaltungen:
- EP-A2- 0 125 835
- WO-A1-00/11327
- WO-A1-00/11327
- WO-A1-99/23367
- WO-A1-2005/005796
- WO-A1-2006/095373
- DE-A1-102011 000 105
- US-A- 4 495 680
- US-A- 5 926 954
- US-A1- 2002 139 503
- US-B1- 6 241 043
- US-B1- 6 412 596
- US-B1- 6 756 107

## Beschreibung

Die vorliegende Anmeldung betrifft in einem ersten Aspekt ein Verfahren zur Herstellung von schalldämpfenden, schallschluckenden und/oder isolierenden Formmaterial. Genauer betrifft das erfindungsgemäße Verfahren eines zur Herstellung dieser Formmaterialien, wobei das Fasermaterial um mindestens zwei Träger gewickelt wird und anschließend der so erhaltene Wickelrohling auf den Trägern vorliegend weiter in sich dauerhaft verfestigt wird, um das erfindungsgemäße Formmaterial zu erhalten. In einem weiteren Aspekt richtet sich die vorliegende Anmeldung auf das so erhaltene Formmaterial, insbesondere in Form von Formmatten oder Formkörpern. Dieses Formmaterial kann insbesondere in Schalldämpfern eingesetzt werden. Schließlich richtet sich die folgende Anmeldung auf eine Vorrichtung zum Herstellen dieser Formmaterialien aus Fasermaterial.

### Stand der Technik

Schalldämpfer weisen schalldämpfende bzw. schallschluckende und isolierende Materialien auf. Üblicherweise werden hierzu Glasfasermaterialien als Fasermaterialien eingesetzt. Diese Fasermaterialien können bei zusammengesetzten Schalldämpfern in die Zwischenbereiche als lose Fasern eingedüst werden. Entsprechende Verfahren sind z.B. in der DE 10 2005 009 045 oder der EP 953 736 beschrieben. Nachteile solcher Eindüsverfahren liegen in der nicht optimalen Verteilung des Fasermateriales, insbesondere in schwer einzudüsenden Bereichen wie Winkel oder sonstigen Hinterschnitten, sowie in der praktischen Umsetzung des Eindüsverfahrens für bestimmte, nicht zylindrische Schalldämpferkonturen aber auch für so genannte Halbschalenschalldämpfer.

Ein anderes Verfahren zur Herstellung von entsprechenden Fasermaterialenthaltenen Schalldämpfern umfasst das Einbringen von schallschluckenden oder schallisolierenden Fasermaterialien während des Zusammensetzens des Schalldämpfers. Die Fasermaterialien werden in den Schalldämpfer vor dem Verschließen des Schalldämpfers eingebracht. Das Einbringen kann dabei über verschiedene Verfahren folgen. So wird derzeit Fasermaterial, insbesondere Glasfasermaterial in Bags, d.h. in Plastiksäcken in die Schalldämpfer während der Montage eingelegt. Dabei sind diese Plastiksäcke, die auch als Netze ausgeführt sein können, aus einem Kunststoff bzw. einer Kunststoffmatrix ausgebildet, der bei höheren Temperaturen schmilzt. Bei erster Inbetriebnahme des Schalldämpfers mit entsprechendem Erwärmen des Schalldämpfers schmilzt dieser Kunststoff und gibt das lose Glasfasermaterial frei. Ein großer Nachteil hierbei ist aber, dass durch das Schmelzen bzw. Verkohlen des Kunststoffmaterials ein unangenehmer Geruch auftritt und die Umwelt belastet wird.

Ein weiterer Nachteil der Verwendung von in Säcken gefüllten losen Glasfasern ist, dass komplexe Strukturen in Schalldämpfer nicht ausreichend durch die Fasern gefüllt werden können. Außerdem kann ein Ausblasen von losen Glasfasern erfolgen.

In einem alternativen Verfahren werden Matten aus Glasfasermaterialien als Einlage in den Schalldämpfer eingelegt. Anschließend wird der Schalldämpfer geschlossen. Diese Einlagen können durch Schmelzfäden verdichtet sein. Diese Schmelzfäden sind dabei derart ausgestaltet, dass sie beim ersten Erwärmen des Schalldämpfers aufschmelzen und sich so die Einlage vollständig in den Freiräumen des Schalldämpfers ausbreiten kann.

In der EP 1 861 592 wird ein Verfahren zum Füllen von Schalldämpfern von Verbrennungsmotoren mit schalldämpfendem Material beschrieben. Das Material ist dabei aus Glasfasern ausgeformt und umfasst ein Aufwickeln der Glasfaserfäden um ein Rohr oder einen Rollenwickler, um eine rohrförmige Masse aus Glasfasern zu erhalten. Die Masse ist dabei derart ausgebildet, dass sie mit ihren Maßen dem auszufüllenden Raum des Schalldämpfers entsprechen. Die rohrförmige Masse wird nach dem Wickeln von dem Rohr bzw. Rollenwickler entfernt und anschließend in einem zweiten Schritt in einer weiteren Vorrichtung verdichtet, so dass eine verflachte rohrförmige Masse vorliegt. Diese abgeflachte Masse wird dann durch irreversibel verwobene oder vereinte Glasfasern und daraus gebildeten Verkettungen verfestigt. Anschließend wird der Schalldämpfer geschlossen. Aus der US 6,196,351 sind entsprechende Schalldämpfermaterialien aus gewickelter Glasfaser bekannt.

EP 0125835 A2 offenbart ein Verfahren und eine Vorrichtung zur Herstellung von strukturierten Kompositen oder nicht gewebten Stoffen aus Fasern oder anderen länglichen flexiblen Materialien, die auf einen länglichen Träger aufgewickelt werden. In der EP 0125835 ist es wichtig, dass die aufgewickelten Materialien von den Trägern kontinuierlich abgezogen werden und anschließend in die gewünschte Form durch Verformung oder Schneiden gebracht werden.

WO 00/11327 beschreibt einen Schalldämpfer für Fahrzeuge der aus einem inneren porösen Rohr und einer äußeren Wand gebildet wird. Zwischen der äußeren Wand und dem inneren Rohr wird ein loses schallabsorbierendes Fasermaterial in Form eines Bettes eingebracht, das unidirektional oder parallel zum Abgasfluss im Schalldämpfer angeordnet ist.

Ein Ziel neuer Formmaterialien, wie Formmatten oder Formkörper als Halbzeuge für Schalldämpfer, ist die Notwendigkeit die Menge an eingesetztem Material zu verringern, um einen Leichtbau zu fördern und damit den Kraftstoffverbrauch zu verringern. Des Weiteren sollten die Dichten innerhalb des Materials des Halbzeugs variabel gestaltbar sein und das Halbzeug selbst in den Schalldämpfer einfach einbringbar sein. Bevorzugt ist dabei eine anwendungsspezifische Formgebung möglich, insbesondere die Herstellung von Formkörpern mit Hohlräumen. Die Herstellung selbst soll ökologisch verbessert sein und insbesondere soll bei Gebrauch keine oder nur eine sehr geringe Emission gesundheitsschädigender Stoffe erfolgen, wie sie für die Verwendung von Säcken beschrieben ist. Weiterhin soll das Verfahren die Herstellung entsprechender Formmaterialien vereinfachen und die erhaltenen Formmaterialien sollen verbesserte Eigenschaften auch im Betrieb aufzeigen.

Der Erfindung liegt die Aufgabe zugrunde, ein Verfahren mit den Merkmalen des Oberbegriffs des Patentanspruchs 1, damit erhältliches Formmaterial, insbesondere für Schalldämpfer, sowie eine Vorrichtung mit den Merkmalen des Oberbegriffs des Patentanspruchs 12 und entsprechende Schalldämpfer bereitzustellen.

Insbesondere soll die Erfindung auch bei komplizierten geometrischen Formen der Dämpferkammer in einem Schalldämpfer ein gleichmäßiges Ausfüllen der Dämpferkammer erlauben, wobei der Materialaufwand aber auch die Emission und Umweltbelastung möglichst gering gehalten wird. Das eingesetzte Formmaterial soll dabei auch im Betrieb große Formstabilität aufweisen und eine relative Verschiebung der Fasern im Formmaterial zueinander soll minimiert sein, um die thermischen und akustischen Eigenschaften des Materials bei zu behalten. Die Aufgabe der Erfindung wird erfindungsgemäß durch ein Verfahren mit den Merkmalen des Patentanspruchs 1, einer Vorrichtung mit den Merkmalen des Patentanspruchs 12 und dem Formmaterial und Schalldämpfer gemäß dem Patentanspruch 10 bzw. 11 gelöst.

### Beschreibung der Erfindung

Gemäß dem erfindungsgemäßen Verfahren zur Herstellung von schalldämpfenden, schallschluckenden und/oder isolierenden Formmaterial, wobei dieses Formmaterial Fasermaterial umfasst, wird in einem ersten Schritt das Fasermaterial um mindestens zwei Träger, die voneinander beabstandet sind, zur Herstellung eines Wickelrohlings gewickelt. In einem zweiten Schritt wird dann der so erhaltene Wickelrohling, der sich noch auf den Trägern befindet, dauerhaft verfestigt, um ein schalldämpfendes, schallschluckendes und/oder isolierendes Formmaterial zu erhalten. Die Verfestigung erfolgt derart, dass das Formmaterial selbst flexibel bleibt. Daher weist das Formteil kein Bindemittel zur Verfestigung auf. Die mindestens zwei Träger sind dabei derart ausgebildet, dass sie bevorzugt verschiebbar sind, um Wickelrohlinge unterschiedlicher Dimensionierung herstellen zu können. In einer bevorzugten Ausführungsform wird das Fasermaterial um mindestens drei Träger gewickelt, um Formmaterial in Form von Körpern, insbesondere Hohlkörpern, herzustellen. Diese mindestens drei Träger, die voneinander beabstandet sind, sind bevorzugt verschiebbar, um eine unterschiedliche Dimensionierung des erhaltenen Formmaterials zu erlauben.

Die Träger können dabei als Stäbe oder Rohre ausgebildet sein. Alternativ können die Träger auch Bleche oder anders dimensionierte Träger darstellen. Die Träger können dabei einen diskontinuierlichen Durchmesser aufweisen. Die Träger können weiterhin gerade sein oder gebogen vorliegen, um dem Formmaterial eine vorgegebene Form zu geben. Die Träger, wie entsprechende Stäbe, können dabei entsprechend so gebogen und in ihrem Durchmesser diskontinuierlich dimensioniert sein, so dass dem Wickelrohling eine entsprechend gewünschte Struktur und Form verliehen wird. Bei dem anschließenden Verfestigen des Wickelrohlings bleibt die Struktur bzw. Form entsprechend erhalten, da der Wickelrohling noch auf den formgebenden Trägern während des Verfestigens verbleibt. Entsprechend einfach ist es möglich, dem Wickelrohling eine dauerhafte Form in Form einer Formmatte oder eines Formkörpers, insbesondere auch in Form eines Hohlkörpers, zu verleihen. Diese dauerhafte Form ist dabei aber bevorzugt noch flexibel ausgebildet.

Dadurch können auch komplizierte geometrische Formen der Dämpferkammer in dem Schalldämpfer durch das Formmaterial ausgefüllt werden. Entsprechend ist es möglich Halbzeuge bzw. Bauteile herzustellen, bei dem die eingesetzte Menge an Fasermaterial reduziert ist, um so einen Leichtbau zu erlauben. Dieser Leichtbau hat zur Konsequenz, dass ökologische Vorteile wie ein Erniedrigen des Kraftstoffverbrauchs usw. erzielt werden. Des Weiteren zeichnet sich das erhaltene Formmaterial durch hervorragende Dimensionsstabilität aus. Weiterhin zeigen die Fasern im Formmaterial aufgrund der Verfestigung eine gute Stabilität relativ zueinander. Das heißt, ein Verschieben der Fasermaterials im Betrieb durch Vibrationen oder Erschütterungen und somit eine Veränderung der akustischen und dämpfenden Eigenschaften ist minimiert.

Durch die verschiebbare Ausgestaltung der Träger kann das Formteil variabel gestaltet werden. Weiterhin ist es möglich, durch entsprechende Auswahl an Fasermaterialien die Eigenschaften des Formmaterials zu beeinflussen.

Die Träger können aus unterschiedlichen Materialien ausgebildet sein und unterschiedliche Oberflächen aufweisen. So können die Träger rutschfest ausgerüstet sein.

Das erfindungsgemäße Verfahren erlaubt des weiteren Formteile mit unterschiedlichen Dichten bereitzustellen. Durch die dauerhafte Verfestigung in vorbestimmten Bereichen ist es möglich, in diesen Bereichen unterschiedliche Dichten im Formmaterial zu erzielen. Entsprechend ist es möglich, durch die Ausgestaltung der Verfestigungsbereiche die Formmaterialdichte variabel zu gestalten. Weiterhin ist die Dimensionstabilität aber auch die Verringerung der Verschiebung der Fasern relativ zueinander verbessert.

Durch die entsprechende Ausgestaltung der Verfestigung ist es weiterhin möglich, Formmaterial, insbesondere Formmatten und Formkörper, bereitzustellen, die zielgerichtet thermische und/oder akustische Anforderungen erfüllen.

Ziel ist es, das erfindungsgemäße Formmaterial in Form von Halbzeugen oder Bauteilen bereitzustellen, so dass diese durch den Anwender einfach ohne technische Hilfsmittel in den Schalldämpfer vor dem Verschließen des Schalldämpfers einbringbar sind, entsprechend müssen die Formmaterialien in Form von Bauteilen oder Halbzeugen bevorzugt flexibel ausgebildet sein. Diese weisen daher keine Bindemittel auf. Durch entsprechende Ausgestaltung der Träger ist es weiterhin möglich, eine anwendungsspezifische Formgebung des Formmaterials zu erzielen. Diese Formgebung wird weiterhin unterstützt, in dem eine dauerhafte Verfestigung des Wickelrohlings auf den Träger erfolgt. Dadurch ist eine dauerhafte Formgebung des Wickelrohlings möglich, um entsprechend geeignetes Formmaterial für insbesondere Schalldämpfer bereitzustellen.

Die Verfestigung, insbesondere eine endlose Verfestigung, ist dauerhaft ausgestaltet. Unter dem Ausdruck "dauerhaft" wird vorliegend verstanden, dass die Verfestigung zumindest solange anhält bis das entsprechende Formmaterial verbaut und das entsprechende Gehäuse, wie der Schalldämpfer, geschlossen vorliegt. Gegebenenfalls kann bei Verwendung entsprechender Materialien, wie Schmelzfaden oder Baumwollfaden, mit niedrigen Schmelz- oder Zerstörungstemperatur, ein zumindest teilweises Auflösen der Verfestigung nach dem Einbau erfolgen, so dass das Formmaterial die Dämpferkammer innerhalb des Gehäuses vollständig ausfüllen kann.

In einer Ausführungsform ist die Verfestigung aber bevorzugt mindestens teilweise auch im Betrieb permanent, um die Dimensionstabilität und Faserstabilität relativ zueinander zu gewährleisten. Bei dem Fasermaterial handelt es sich um Glas-Mineralfasern, Karbonfasern, Silikatglasfasern, Aramid. Diese können alleine oder als Mischungen dieser Fasern eingesetzt werden.

Das erfindungsgemäß hergestellte Formmaterial ist eines, das keine Bindemittel oder Klebstoffe enthält.

Die Verfestigung erfolgt dabei durch bekannte Verfestigungsmaßnahmen, wie mittels Luftverwirbelung, Vernähen, Verketten, Verknoten, Vernadeln, Verlaben, Verfilzen oder Verhäkeln. Das Verfestigen kann in einer alternativen Ausführungsform auch derart erfolgen, dass zur Verfestigung ein Faden eingesetzt wird, der einen niedrigeren Schmelzpunkt als das für den Wickelrohling verwendete Fasermaterial aufweist. Dadurch ist es möglich, dass nach Einbringen und Schließen des Schalldämpfers das Formmaterial im Volumen zunehmen kann, um entsprechend den Raum im Schalldämpfer vollständig auszufüllen.

Erfindungsgemäß ist es weiterhin bevorzugt, dass das Verfestigen des Wickelrohlings die Ausbildung einer Formmatte oder eines Formkörpers, insbesondere eines Hohlkörpers, erlaubt.

Bevorzugt findet dabei auch ein Verdichten des Wickelrohlings statt.

Besonders bevorzugt ist das Fasermaterial des Wickelrohlings schraubenförmig, insbesondere mit einer Steigung von > 3%, gewickelt. Durch entsprechende Führung des Führungselements für das Fasermaterial bei dem Herstellungsprozess ist ein entsprechendes Ausbilden des Wickelrohlings möglich. In einer alternativen Ausführungsform können die Fasern im Wesentlichen parallel geführt sein. Die Fasern können ein- oder bevorzugt mehrlagig gewickelt sein, wobei die Wicklung auch gegenläufig sein kann, wie sie dem Fachmann wohlbekannt sind.

Das Formmaterial kann dabei als Endlosformmaterial hergestellt sein. Alternativ erlaubt das erfindungsgemäße Verfahren die Ausbildung von Halbzeugen definierter Dimension. Insbesondere ist es möglich, passgenaue Formmaterialien, wie Formmatten oder Formkörper, bereitzustellen. Die so hergestellten Körper können dabei rotations- oder nichtrotationssymmetrische Teile sein.

Bei Herstellung eines Endlosformmaterials kann das Produkt als Rollenware aufgewickelt werden oder durch eine entsprechende Einrichtung auf die gewünschte Endkontur geschnitten werden. Das Schneiden kann dabei in einem vorgegebenen Winkel oder auch mit einer anderen Kontur erfolgen, wie unten dargestellt.

Das erfindungsgemäße Verfahren ist aber auch zur Einzelteilfertigung ausgelegt.

Die erfindungsgemäß hergestellten Formteile haben ein größeres Volumen im Vergleich zu bestehenden Halbzeugen. Der Grad der Voluminisierung (Dichte des Teiles) kann zudem durch die Wicklung (Art der Wicklung, Dichte der Wicklung, etc.) und die anschließende Verfestigung aufgrund der erfindungsgemäßen Herstellung durch Wickeln auf mindestens zwei Trägern beeinflusst werden. Insbesondere wenn als Fasermaterialien so genannte effekttexturierte Materialien Verwendung finden, bei denen ein Hauptfaden spannungsfrei um einen Basisfaden texturiert ist, kann diese positive Beeinflussung der Voluminisierung erreicht werden. Somit ist eine Verringerung des eingesetzten Materials bei bevorzugt gleichzeitigem Größenvolumen möglich.

Als Fasermaterial können dabei eine Kombination von Endlosfasermaterial und Kurzfasermaterial und/oder eine Kombination unterschiedlicher Fasermaterialien und Faserlängen verwendet wird.

Mögliche Fasermaterialien können in Form von geöffneten oder nicht geöffneten Rovings vorliegen oder als geöffnete oder nicht geöffnete Garne, z.B. als Zwirn. Die Fasern können Monofilamente darstellen. Bevorzugt kann es sich bei den eingesetzten Fasermaterialien um effekttexturierte Fasern mit einem Basisfaden und dem texturiertem Hauptfaden handeln. Dadurch ist es möglich, ein erheblich größeres Faservolumen mit Rückstellcharakter zu erreichen.

Das erfindungsgemäße Verfahren kann weiterhin einen weiteren Schritt des Schnürens des Formmaterials in eine gewünschte Form umfassen. Dieses Schnüren kann dabei mit verschiedenen Materialien erfolgen. Bei einem Schnüren mit einem Schmelzfaden oder Baumwollfaden ist es möglich, das Formmaterial in eine gewünschte Form zu bringen, die im Betrieb z.B. in einem Schalldämpfer wieder aufgehoben wird. Ein entsprechendes Schnüren erlaubt z.B. einen einfachen Einbau des Formmaterials in die Dämpferkammer. Das Schnüren kann auch eine permanente Formgebung erlauben. Das Schnüren des Formmaterials kann dabei erfolgen, während dieses noch auf den Trägern ist oder nachdem das Formmaterial von den Trägern genommen wurde.

In einem weiteren Aspekt richtet sich die vorliegende Anmeldung auf ein Formmaterial, insbesondere eine Formmatte oder einen Formkörper, wie insbesondere einen Formhohlkörper, wobei dieser durch das erfindungsgemäße Verfahren erhältlich ist.

Die Formmaterialien gemäß der vorliegenden Erfindung sind insbesondere solche, geeignet zum Einbau in Schalldämpfern. Entsprechend richtet sich in einem weiteren Aspekt die vorliegende Anmeldung auf Schalldämpfer ausgestattet mit erfindungsgemäßem Formmaterial, insbesondere Formmatten und Formkörpern.

Schließlich richtet sich in einem weiteren Aspekt die vorliegende Anmeldung auf Vorrichtungen zum Herstellen von schalldämpfenden, schallschluckenden und/oder isolierenden Formmaterial aus Fasermaterial. Diese Vorrichtungen sind insbesondere zur Durchführung des erfindungsgemäßen Verfahrens geeignet. Diese Vorrichtung umfasst mindestens zwei Träger, die gegebenenfalls verschiebbar sind. Diese beiden Träger sind voneinander beabstandet und gegebenenfalls rotierbar ausgebildet. Dabei kann der Träger selbst rotierbar ausgebildet sein und/oder die Träger sind als Gruppe auf einer Vorrichtung rotierbar. Weiterhin umfasst die erfindungsgemäße Vorrichtung eine Einrichtung zum Umwickeln der Träger mit der Faser. Die erfindungsgemäße Vorrichtung weist dabei insbesondere ein Führungselement (Fadengeber oder Läufer) zum Führen des Fasermaterials, insbesondere durch eine Öse auf. Dieses Führungselement erlaubt paralleles oder kreuzverlegtes Wickeln des Fasermaterials um die Träger. Schließlich weist die erfindungsgemäße Vorrichtung eine Einrichtung zum Verfestigen des Wickelrohlings auf. Dabei liegt der Wickelrohling gewickelt um die Träger vor. Die Einrichtung verfestigt den Wickelrohling, während sich dieser um die Träger gewickelt vorliegt. In einer Ausführungsform insbesondere bei einer Vorrichtung zur Herstellung von Endlosformmaterial weist die Vorrichtung weiterhin eine Einrichtung zum Schneiden des Endlosformmaterials auf.

Die Einrichtung zum Verfestigen des auf den Trägern vorliegenden Wickelrohlings ist bevorzugt eine zur Verfestigung mittels Luftverwirbelung, zum Vernähen, zum Verketten, zum Verknoten oder zum Vernadeln, insbesondere Rotationsvernadeln, zum Verfilzen oder zum Verhäkeln.

Bevorzugt ist die Vorrichtung eine, die mindestens drei voneinander beabstandete Träger, die gegebenenfalls gegeneinander verschiebbar sind, aufweist, wobei diese Einrichtung mit den Trägern rotierbar ausgebildet ist.

Ebenso ist die Einrichtung mit einer um mindestens zwei Träger rotierenden Vorrichtung zur Wicklung des Fasermateriales ausführbar. Diese mit Führungswalzen oder schneckenförmig ausgebildeten Trägerstangen erlauben einen Weitertransport des Endlosformmateriales zu weiteren Verarbeitungsschritten wie der zusätzlichen Verfestigung oder zum Aufwickeln zur Rollenware.

Im Folgenden wird die Erfindung anhand der in den Figuren dargestellten bevorzugten Ausführungsbeispiele weiter erläutert und beschrieben.

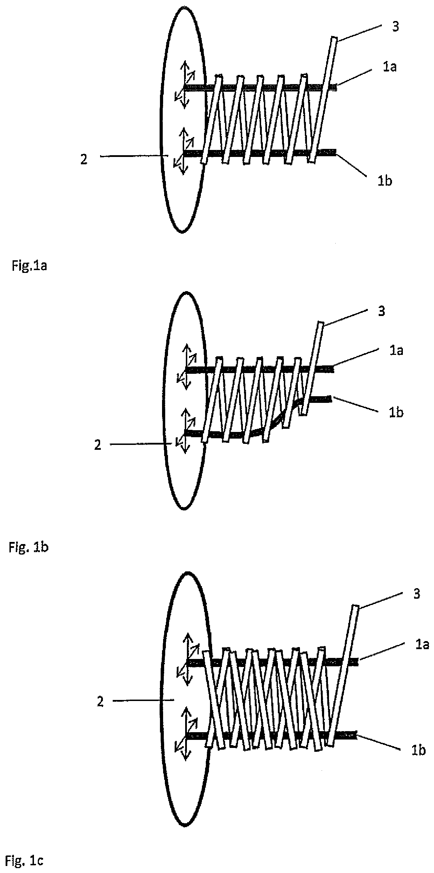

In der Figur 1 sind verschiedene Möglichkeiten der Wicklung des Fasermaterials auf den Trägern dargestellt. Die Träger 1a, 1b sind dabei verschiebbar angeordnet. Die Träger selbst, die vorliegend als Stäbe ausgebildet sind, können dabei als Einzelstäbe rotierbar sein oder die Vorrichtung 2 mit den Stäben kann rotierbar ausgebildet sein. Bei der Ausführungsform gemäß Figur 1a sind die Stäbe dabei im Wesentlichen parallel zueinander ausgebildet, während in der Ausführungsform gemäß Figur 1b der Stab 1b gebogen ist, so dass der Wickelrohling eine entsprechende Formgebung erhält. Bei Endloswicklungen sind die Träger üblicherweise im Wesentlichen parallel ausgebildet. Zum Beispiel können diese rotierbaren Stäbe eine spiralförmige Oberfläche aufweisen, die einen Vorschub des Wickelrohlings erlaubt. In der Figur 1a und 1b ist die gewickelte Faser 3 spiralförmig um die Träger (Wickelkörper) gewickelt. In der Figur 1c ist eine schraubenförmige Wicklung mit einer zweiten gegenläufigen schraubenförmigen Wicklung dargestellt, wodurch sich eine bzw. mehrfache Kreuzung der Fasern 3 ergibt.

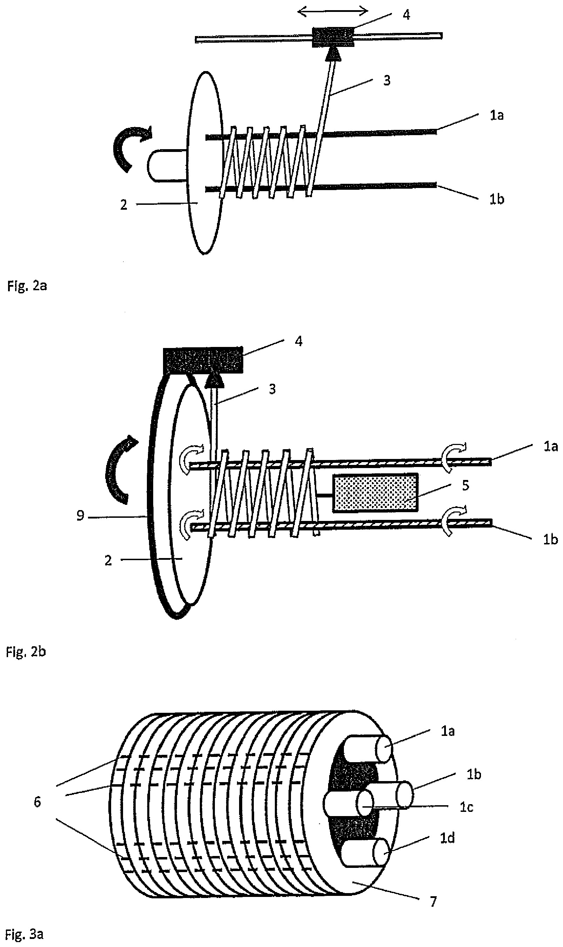

In der Figur 2a sind die Träger 1a und 1b rotierbar auf der Vorrichtung 2 angeordnet. Die Faser 3 wird durch den verschiebbaren Läufer oder Fasergeber 4 schraubenförmig auf die sich rotierenden Träger gewickelt, um den Wickelrohling auszubilden. Der Läufer 4 ist dabei beweglich an einem Bewegungselement angeordnet, um die verschiedenen Formen der Wicklung für den Wickelrohling zu erlauben. Die Wicklung kann dabei schraubenförmig z.B. mit einer Steigung von > 3% oder im Wesentlichen parallel erfolgen. Die Wicklung kann dabei ein- oder mehrlagig ausgebildet sein, wobei bei mehrlagiger Ausbildung die Wicklung auch gegenläufige schraubenförmige Wicklungen darstellen können, wie auch in Abbildung 1C dargestellt.

In der Ausführungsform gemäß Figur 2b ist eine ähnliche Einrichtung dargestellt. Hier ist der Fadengeber 4 an einer um die Vorrichtung 2 rotierenden Scheibe 29 angeordnet. Die Träger 1a, 1b bleiben dabei starr auf der der Vorrichtung 2. Weiterhin können die Träger 1a und 1b als rotierbare Einzelstäbe ausgebildet sein. Sie weisen hierbei eine spiralförmige Oberfläche auf, die einen Vorschub des Wickelrohlings ermöglichen. Ebenfalls dargestellt ist die Einrichtung 5 zum Verfestigen des Wickelrohlings. Die Einrichtung 5 ermöglicht das dauerhafte Verfestigen des auf den Trägern 1a, 1b vorliegenden Wickelrohlings, z.B. durch Luftverwirbelung, Vernähen, Verketten, Verknoten, Vernadeln, Verfilzen oder Verhäkeln.

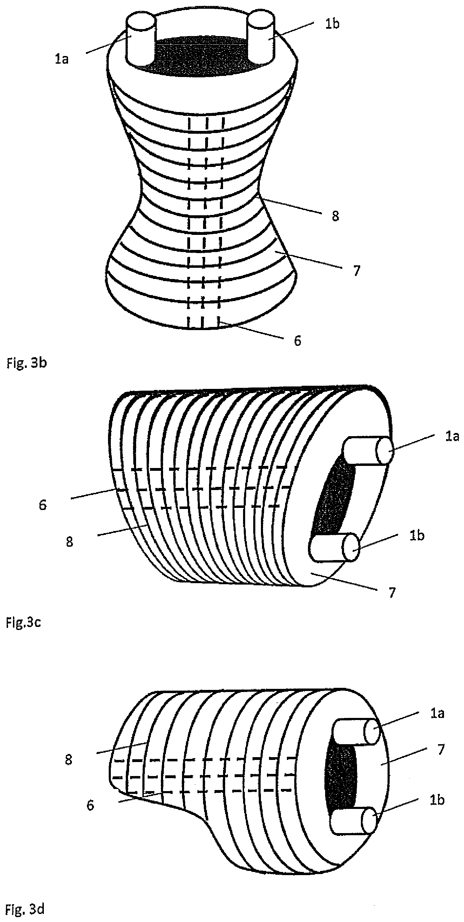

In der Figur 3 sind verschiedene Formmaterialien dargestellt. Die Figur 3a zeigt einen Hohlkörper, der auf vier Trägern 1a, 1b, 1c, 1d vorliegt. Angedeutet sind weiterhin die Verfestigungsbereiche 6 des verfestigten Formmaterials 7.

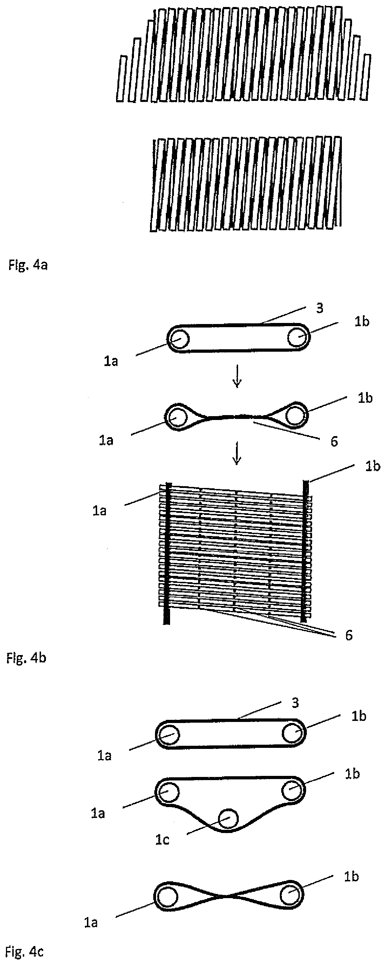

Durch entsprechendes Schnüren lässt sich das verfestigte Fasermaterial dann weiter in gewünschte Formen bringen. Dies ist in der Figur 3c und 3d dargestellt. Durch entsprechende Schnürungen 8 kann das Formmaterial in die gewünschte Struktur gebracht werden. In der Figur 3b ist ein erfindungsgemäßer Formkörper 7 dargestellt, der auf zwei gebogenen Trägern 1a und 1b gewickelt wurde. In dem Bereich 6 wurde dieser Formkörper weiter verfestigt. Wie in der Figur dargestellt, kann die Verfestigung des Wickelrohlings also nur auf einer Seite der Wicklung erfolgen. Alternativ kann auch eine Verfestigung beider Wickelseiten erfolgen, so dass eine verflachte und verdichtete Fasermatte erhalten wird. Eine solche Ausführungsform ist in der Figur 4b dargestellt. Die Figur 4b zeigt die einzelnen Verfahrensschritte. Im Schritt 1 wird um die beiden Träger 1a und 1b die Faser 3 gewickelt. Im zweiten Schritt wird dieser Wickelrohling weiter verfestigt, um ein verfestigtes Formmaterial, vorliegend in Form einer Fasermatte, zu erhalten. Wie dargestellt wurden hier beide Seiten der Wicklung miteinander verfestigt, um eine abgeflachte und verfestigte Matte zu erhalten. Die untere Darstellung zeigt diese Fasermatte aus einer anderen Perspektive. Zu erkennen sind die Stäbe 1a und 1b, das Formmaterial 7 mit den Fasern 3 sowie die verfestigten Bereiche 6.

In der Figur 4a sind verschiedene Arten des Zuschnitts des erhaltenen Formmaterials dargestellt. Die obere Darstellung zeigt einen an beiden Enden rechtwinklig ausgeführten Zuschnitt; die mittlere Abbildung zeigt eine an beiden Seiten schräg ausgeführte Kontur.

Die Figur 4c zeigt die verschiedenen Möglichkeiten der Wicklung bei zwei bzw. drei Trägern, um den Wickelrohling zu erhalten. In der oberen Darstellung ist die einfache Wicklung um die beiden Stäbe 1a und 1b dargestellt. Die mittlere Darstellung zeigt eine Wicklung mit drei Stäben 1a, 1b, 1c. Die untere Darstellung zeigt eine weitere bevorzugte Ausführungsform, wobei die Führung der Faser 3 zwischen den Stäben überkreuzend ist. Diese Ausführungsform erlaubt eine Verfestigung des erhaltenen Formmaterials ohne zusätzliche Maßnahmen.

## Patentansprüche

1. Verfahren zur Herstellung von schalldämpfenden, schallschluckenden oder isolierenden Formmaterial (7), wobei dieses Formmaterial Fasermaterial (3) umfasst, **dadurch gekennzeichnet, dass** es die folgenden Schritte aufweist:
a) Wickeln des Fasermaterials (3) um mindestens zwei Träger (1a, 1b), die voneinander, bevorzugt verschiebbar, beabstandet sind, zur Herstellung eines Wickelrohlings,
b) dauerhaftes Verfestigen des auf den Trägern (1a, 1b) vorliegenden Wickelrohlings, zur Ausbildung des schalldämpfenden, schallschluckenden oder isolierenden Formmaterials (7), **dadurch gekennzeichnet, dass** die dauerhafte Verfestigung des Wickelrohlings zur Ausbildung des Formmaterials (7) auf den Trägern (1a, 1b) mittels Luftverwirbelung, Vernähen, Verketten, Verknoten, Vernadeln, Verfilzen oder Verhäkeln erfolgt und dass die Verfestigung ohne Bindemittel erfolgt, wobei das Fasermaterial Glas-Mineralfasern, Karbonfasern, Silikatglasfasern, Aramid, oder Gemische hiervon sind.

2. Verfahren nach einem der vorherigen Ansprüche, **dadurch gekennzeichnet, dass** mindestens drei oder mehr Träger, die voneinander, gegebenenfalls verschiebbar, beabstandet sind, umwickelt werden, zur Ausbildung eines Formkörpers, insbesondere eines Hohlkörpers.

3. Verfahren nach einem der vorherigen Ansprüche, **dadurch gekennzeichnet, dass** das Verfestigen ein Verdichten des Wickelrohlings umfasst, zur Herstellung eines Formmaterials (7) in Form einer Matte, eines Körpers, insbesondere eines Hohlkörpers.

4. Verfahren nach einem der vorherigen Ansprüche, **dadurch gekennzeichnet, dass** die Fasermaterialien (3) schraubenförmig, insbesondere mit einer Steigung von > 3% gewickelt werden.

5. Verfahren nach einem der vorherigen Ansprüche, **dadurch gekennzeichnet, dass** ein Endlosformmaterial hergestellt wird.

6. Verfahren nach einem der vorherigen Ansprüche, **dadurch gekennzeichnet, dass** das erhaltende Formmaterial (7) in einem weiteren Schritt durch Schnüren (8) in eine gewünschte Form verformt wird.

7. Verfahren nach einem der vorherigen Ansprüche, **dadurch gekennzeichnet, dass** das Fasermaterial (3) eine Kombination von Endlosfasermaterial und Kurzfasermaterial und/oder einer Kombination unterschiedlicher Fasermaterialien und Faserlängen umfasst und/oder das Fasermaterial in Form von Rovings und/oder Garnen, und/oder Zwirnen und/oder effekttexturierten Fasern und/oder Monofilamenten eingesetzt wird.

8. Formmaterial (7), erhältlich mit einem Verfahren nach einem der Ansprüche 1 bis 7.

9. Formmatte und Formkörper erhältlich mit einem Verfahren nach einem der Ansprüche 1 bis 7.

10. Schalldämpfer umfassend Formmaterial (7), nach Anspruch 8.

11. Schalldämpfer umfassend eine Formmatte oder Formkörper nach Anspruch 9.

12. Vorrichtung (2) zur Herstellung von verfestigten schalldämpfenden, schallschluckenden und/oder isolierenden Formmaterial (7) mit mindestens zwei gegebenenfalls verschiebbaren Trägern (1a, 1b), die voneinander beabstandet sind, wobei diese Träger als Gruppe von Träger rotierbar angeordnet sind, mit einer Einrichtung zum Umwickeln der mindestens zwei Träger mit einem Fasermaterial (3) und mit einer Einrichtung (5) zum Verfestigen des auf den Trägern vorliegenden, aus dem Fasermaterial hergestellten Wickelrohlings, **dadurch gekennzeichnet, dass** die Einrichtung (5) zum Verfestigen des auf den Trägern vorliegenden Wickelrohlings eine ist zur Verfestigung mittels Luftverwirbelung, zum Vernähen, Verketten, Verknoten oder Vernadeln, insbesondere Rotationsvernadeln, Verfilzen oder Verhäkeln ist.

13. Vorrichtung (2) nach Anspruch 12, **dadurch gekennzeichnet, dass** die Einrichtung mit den Trägern bevorzugt eine ist mit mindestens drei voneinander beabstandeten Trägern (1a, 1b, 1c), die gegebenenfalls gegeneinander verschiebbar sind und diese Einrichtung als Gruppe und/oder die Einzelträger gegebenenfalls rotierbar ausgebildet ist.

14. Vorrichtung (2) nach einem der Ansprüche 12 oder 13, **dadurch gekennzeichnet, dass** diese zum Herstellen eines endlosen Formmaterials (7) ausgebildet ist und weiterhin eine Einrichtung zum Schneiden des Formmaterials auf eine vorbestimmte Länge aufweist.

## Claims

1. A method for producing sound-damping, sound-absorbing or insulating molded material (7), whereby said molded material comprise fiber material (3), **characterized in** comprising the following steps:
a) winding the fibrous material (3) around at least two carriers (1a, 1b), which are spaced apart from one another, preferably displaceable, for producing a wound blank;
b) permanently solidifying the wound blank, which is presented on the carriers (1a, 1b), for the formation of the sound-damping, sound-absorbing or insulation molded material (7), **characterized in that** the permanent solidification of the wound blank for the formation of the molded material (7) on the carriers (1a, 1b) takes place by means of air entanglement, stitching, linking, knotting, needling, felting or crocheting and wherein the solidification takes place without bonding agents, wherein the fiber material is in the form of glass-mineral fibers, carbon fibers, silicate-glass fibers, aramid or blends thereof.

2. The method according to anyone of the preceding claims, **characterized in** winding takes place around at least three or more carriers, which are, if applicable displaceably, spaced apart from one another, for the formation of a molded object, in particular, a hollow object.

3. The method according to anyone of the preceding claims, **characterized in that** the solidification comprise a densification of the wound blank, for producing a molded material (7) in the form of a mat or an object, in particular, a hollow object.

4. The method according to anyone of the preceding claims, **characterized in that** the fibrous materials (3) are helically wound, in particular, wound at a pitch of > 3%.

5. The method according to anyone of the preceding claims, **characterized in that** a continuous molded material is produced.

6. The method according to anyone of the preceding claims, **characterized in that** the molded material obtained (7), in a further step, is deformed into a required shape by trussing (8).

7. The method according to anyone of the preceding claims, **characterized in that** the fibrous material (3) is a combination of continuous-fiber material and short-fiber material and/or a combination of different fibrous materials and fiber lengths, and/or the fibrous material is used in the form of rovings and/or yarns and/or doubled yarns and/or effect-texturized fibers and/or monofilaments.

8. A molded material (7) obtainable by a method as claimed in anyone of claims 1 to 7.

9. A molded mat or a molded object obtainable by a method according to anyone of claims 1 to 7.

10. Muffler containing molded material (7) according to claim 8.

11. Muffler comprising a molded mat or a molded object according to claim 9.

12. A device (2) for manufacturing of solidified sound-damping, sound-absorbing and/or insulating molded material (7) having at least two, if applicable displaceable, carriers (1a, 1b), which are spaced apart from one another, said carriers being rotatably arranged as a group of carriers, having a unit for winding a fiber material (3) around the at least two carriers and having a unit (5) for solidifying the wound blank which is produced form the fibrous material and presented on the carriers, **characterized in that** the unit (5) for solidifying the wound blank presented on the carriers is one for solidification by means of air entanglement, for stitching, linking, knotting or needling, in particular rotary needling, felting or crocheting.

13. The device (2) according to claim 12, **characterized in that** the unit having the carriers is preferably one having at least three spaced-apart carriers (1a, 1b, 1c), which are, if applicable, displaceable in relation to one another, and this unit, as a group and/or the individual carriers is/are, if applicable, rotatably configured.

14. The device (2) according to anyone of claims 12 or 13, **characterized in that** said device is configured for producing a continuous fibrous material (7) and furthermore has a unit for cutting the molded material to a predetermined length.

## Revendications

1. Procédé de fabrication d'un matériau façonné (7) acoustiquement isolant, amortissant le bruit ou isolant, ce matériau façonné comportant un matériau fibreux (3),
**caractérisé en ce que** le procédé présente les étapes suivantes :
a) bobinage du matériau fibreux (3) autour d'au moins deux supports (1a, 1b) maintenus à distance mutuelle et pouvant de préférence coulisser l'un par rapport à l'autre, pour former une ébauche de bobine,
b) solidification permanente de l'ébauche de bobine présente sur les supports (1a, 1b) pour former le matériau façonné (7) acoustiquement isolant, amortissant le bruit ou isolant,
**caractérisé en ce que**
la solidification permanente de l'ébauche de bobine en vue de former le matériau façonné (7) sur les supports (1a, 1b) s'effectue par tourbillonnage à l'air, couture, concaténation, nouage, aiguilletage, feutrage ou crochetage et
**en ce que** la solidification s'effectue sans liant, le matériau fibreux étant fait de fibres minérales en verre, de fibres de carbone, de fibres de verre au silicate, d'aramide ou de leurs mélanges.

2. Procédé selon la revendication précédente, **caractérisé en ce que** trois ou plusieurs supports qui sont maintenus à distance mutuelle et éventuellement en pouvant coulisser l'un par rapport à l'autre sont bobinés pour former un corps façonné, en particulier un corps creux.

3. Procédé selon l'une des revendications précédentes, **caractérisé en ce que** la solidification comporte un compactage de l'ébauche de bobine pour former un matériau façonné (7) qui présente la forme d'un mat, d'un corps et en particulier d'un corps creux.

4. Procédé selon l'une des revendications précédentes, **caractérisé en ce que** les matériaux fibreux (3) sont bobinés en hélice, en particulier à un pas > 3 %.

5. Procédé selon l'une des revendications précédentes, **caractérisé en ce qu'**un matériau façonné sans fin est réalisé.

6. Procédé selon l'une des revendications précédentes, **caractérisé en ce que** dans une étape ultérieure, le matériau façonné (7) obtenu est déformé par des cordons (8) pour obtenir la forme souhaitée.

7. Procédé selon l'une des revendications précédentes, **caractérisé en ce que** le matériau fibreux (3) comporte une combinaison de matériaux en fibres sans fin et de matériaux en courtes fibres et/ou une combinaison de différents matériaux fibreux et de différentes longueurs de fibres, et/ou **en ce que** le matériau fibreux est utilisé sous la forme de mèches, de fils retordus, de fibres texturées avec effet et/ou de monofilaments.

8. Matériau façonné (7) obtenu en recourant à un procédé selon l'une des revendications 1 à 7.

9. Mat façonné et corps façonné (7) obtenus en recourant à un procédé selon l'une des revendications 1 à 7.

10. Isolant acoustique comprenant un matériau façonné (7) selon la revendication 8.

11. Isolant acoustique comprenant un mat façonné ou un corps façonné selon la revendication 9.

12. Ensemble (2) pour la fabrication d'un matériau façonné (7) acoustiquement isolant, amortissant le bruit ou isolant,
l'ensemble présentant au moins deux supports (1a, 1b) maintenus à distance mutuelle et pouvant de préférence coulisser l'un par rapport à l'autre,
ces supports étant disposés en un groupe de supports aptes à tourner et présentant un dispositif de bobinage des deux ou plusieurs supports par un matériau fibreux (3) et un dispositif (5) de solidification de l'ébauche de bobine réalisée en matériau fibreux sur les supports,
**caractérisé en ce que**
le dispositif (5) de solidification de l'ébauche de bobine sur les supports est un dispositif de solidification par tourbillonnage à l'air, couture, concaténation, nouage ou aiguilletage, en particulier par aiguilletage rotatif, feutrage ou crochetage.

13. Ensemble (2) selon la revendication 12, **caractérisé en ce que** le dispositif présentant les supports est de préférence un dispositif qui présente au moins trois supports (1a, 1b, 1c) maintenus à distance mutuelle et éventuellement aptes à coulisser les uns par rapport aux autres, ce dispositif étant configuré comme groupe et/ou les supports individuels pouvant éventuellement tourner.

14. Ensemble (2) selon l'une des revendications 12 ou 13, **caractérisé en ce qu'**il est configuré pour fabriquer un matériau façonné (7) sans fin et **en ce qu'**il présente en outre un dispositif de découpe du matériau façonné à une longueur prédéterminée.
